# EUROPÄISCHE PATENTSCHRIFT

(11) **EP 1 231 126 B1**
(45) Veröffentlichungstag und Bekanntmachung des Hinweises auf die Patenterteilung: **27.04.2005**
(21) Anmeldenummer: 02002514.4
(22) Anmeldetag: 02.02.2002
(51) Int. Cl.: B62B 9/12

(54) **Nachrüstsatz für dreirädrige Schiebewagen für Kinder und/oder Puppen**
Retrofittable element for three-wheeled stroller for children or dolls
Elément montable ultérieurement pour voiture d'enfant, ou de poupée, à trois roues

(30) Priorität: 08.02.2001 DE 20102322 U; 09.02.2001 DE 20102341 U
(43) Veröffentlichungstag der Anmeldung: 14.08.2002
(73) Patentinhaber: TFK Trends for Kids GmbH Vertrieb von Kinder-Trend-Artikeln, 84030 Ergolding (DE)
(72) Erfinder: Beger, Oliver, 84030 Ergolding (DE)
(74) Vertreter: Eichstädt, Alfred, Dipl.-Ing.

(56) Entgegenhaltungen:
- DE-U- 20 109 129
- US-A- 5 765 855
- US-A1- 2002 066 156
- US-B1- 6 443 467

## Beschreibung

Die Erfindung betrifft einen Nachrüstsatz für dreirädrige Schiebewagen für Kinder und/oder Puppen sowie einen mit einem solchen Nachrüstsatz ausgestatteten dreirädrigen Schiebewagen für Kinder und Puppen.

Aus der US-5,765,856 ist ein dreirädriger Schiebewagen für Kinder bekannt, der Schrägholme aufweist, zwischen denen ein Sitzeinsatz vorgesehen ist und an welchen Stützstreben für hintere Räder angelenkt sind. Die beiden tragenden Schrägholme weisen unten abgewinkelte Teile auf, die an einem waagerechten Verbindungsteil befestigt sind. Dieses Verbindungsteil verläuft gegenüber dem Aufstellboden im wesentlichen parallel. In der Unterseite des Verbindungsteils ist in einem senkrechten Schwenklager ein Lagerzapfen einer Gabel drehbar gelagert, die an ihren Enden eine Achse für ein zwischengesetztes vorderes Laufrad aufweist. Mit diesem dreirädrigen Schiebewagen kann auf einfache Weise im Bogen gefahren werden. Das Vorderrad richtet sich dabei entsprechend der an den Schrägholmenden am vorgesehenen Schieber ausgeübten Kraft aus. Darüber hinaus sind Mittel vorgesehen, um eine Arretierung des Lagerzapfens vornehmen zu können, damit die Räder in gewünschter Richtung arretiert gehalten werden. Bei dieser Ausführungsform ist das Vorderrad stets als fester Bestandteil am Kinderwagengestell vorgesehen.

Andere bekannte dreirädrige Schiebewagen weisen hingegen ein starr gelagertes Einzelrad auf, das zwischen den beiden Holmschenkeln oder einer Gabel gelagert ist. Beispielsweise wird auf die EP 1 031 490 A1 und die US-Schriften 5,123,670, 5,562,300 sowie 5,765,855 verwiesen.

Bei allen diesen Ausführungen ist stets ein einzelnes Vorderrad vorgesehen, das wie das Vorderrad eines Fahrrades eine Radnabe aufweist, die auf einer Achse mit seitlich vorstehenden Schraubenzapfen drehbar gelagert ist. Die Achse wird in U-förmige Aufnahmen an den Holm- bzw. Gabelschenkelenden aufgesteckt und hieran mittels Schrauben und Kontermuttern befestigt bzw. unter Verwendung eines Schnellverschlusselementes, das durch Umlegen eines Spannbügels die notwendige axiale Spannkraft auf die Achse und die Schraubverbinder ausübt, gesichert.

Der Erfindung liegt die Aufgabe zugrunde, einen Nachrüstsatz für Schiebewagen der gattungsgemäßen Art anzugeben, der - wie in der US 5,765,856 angegeben ist - eine Verdrehung der Radanordnung um eine senkrechte Achse auch bei solchen Schiebewagen ermöglicht, die normalerweise nur ein starr gelagertes Vorderrad aufweisen.

Die Aufgabe löst die Erfindung durch Ausgestaltung des Nachrüstsatzes mit den im Anspruch 1 angegebenen Merkmalen. Eine Lösungsvariante unter Verwendung eines flächenförmigen oder gehäuseförmigen Trägers ist in den Ansprüchen 2 und 16 angegeben. Eine andere vorteilhafte Ausführung mit einem Träger aus zwei Abschnitten ist im Anspruch 3 angegeben.

Während die Lösung nach Anspruch 3 einen Träger vorsieht, der beispielsweise aus Rohr gefertigt werden kann, ist in den Ansprüchen 2 und 16 jeweils ein Träger angegeben, der als Flächenelement ausgebildet ist und an den beiden Holmenden der Gabel des Schiebewagens befestigbar ist. Die einfachste Befestigungsart besteht darin, mittels einer Gewindestange oder eines Bolzens mit seitlichem Gewinde, die oder der durch fluchtende Bohrungen in Seitenwänden des Trägers hindurchgesteckt werden, an den vorgesehenen U-förmigen Lagerausnehmungen den Träger an den Holmenden anzuschrauben oder mit Spannverschluss zu befestigen. Die Verbindung kann unter Verwendung von Kontermuttern oder Konterspannelementen erfolgen. Der Träger erstreckt sich von dem vorderen Befestigungspunkt ausgehend mindestens über einen größeren Abschnitt über die Holmenden und sollte im hinteren Bereich an mindestens einem Holmende oder an einem Halter im Wagengestell fixiert sein. Hierfür können an den Holmen Schraubbolzen vorgesehen sein oder aber auch Aufklippteile verwendet werden. Es ist ferner möglich, die abgewinketlen Seitenwände des flächenförmigen Trägers so auszuformen, dass sie U-förmige Führungsschienen für die Holmenden bilden, so dass eine weitere Sicherung entbehrlich ist. Dies ist auch mittels die Holmenden untergreifenden Winkelansätzen realisierbar. Um eine senkrechte Lagerung der Schwenkachse des Radlagerhalters auf einfache Weise zu realisieren, kann darüber hinaus der Träger in Form eines auf die Gabelenden aufschiebbaren Gehäuses ausgeführt werden. Im Fall dass Seitenwände oder ein Gehäuse verwendet werden, muss die Breite dem äußeren Abstand der Holmenden entsprechend angepasst sein.

Im Anspruch 20 ist ein Schiebewagen angegeben, der mit einem Nachrüstsatz gemäß der Erfindung ausgestattet ist.

Vorteilhafte Weiterbildungen der Erfindung sind in den Unteransprüchen selbsterklärend im einzelnen angegeben.

Selbstverständlich kann mit einem solchen Nachrüstsatz ein Wagen der gattungsgemäßen Art auch bereits ausgeliefert werden. In diesem Fall würde ein normales Rad mit starrer Achsenanordnung als zusätzliches Rad mit angeboten werden können. Durch die konstruktive Ausführung des Trägers für das Lagergehäuse der Radanordnung ist in jedem Fall gewährleistet, dass mindestens eine Dreipunktbefestigung sichergestellt ist. Im Fall der Verwendung von Querstellteilen, die an den Holmen angeschraubt, angeklippt oder mit anderen Befestigungsmitteln befestigt werden, ist auch eine Vierpunktbefestigung sichergestellt. Eine einfache Rohrausführung des Trägers und eine einfache Befestigung über die Achse, die durch den Querverbindungsteil verläuft, sind dann möglich, wenn, wie im Anspruch 13 angegeben ist, eine Verdrehsicherung über einen Halter gewährleistet ist. Es hat sich gezeigt, dass insbesondere bei stark beanspruchten und belasteten Schiebewagen ein Träger mit einem zweiten Abschnitt eine erhöhte Stabilität bietet.

Eine Befestigung über verschiedene Punkte ist durch die Lösung gemäß den Ansprüchen 14 bis 17 möglich, wobei die flächenförmigen bzw. die in Form eines Gehäuses ausgebildeten Träger an verschiedenen Punkten an den Holmenden z.B. mittels Schraubklemmen angeschraubt oder mittels Spannhalter angeklippt und/oder zusätzlich zu der Schraubverbindung an den U-förmigen Aufnahmen der Holmenden befestigt werden können.

Die Erfindung ist grundsätzlich auf alle dreirädrigen Schiebewagen anwendbar, die zwei parallele oder nahezu parallele Holmenden oder eine Gabel zur Aufnahme des Vorderrades aufweisen. Ist darüber hinaus an einem Querstück bzw. Halter der Gabel eine Bremsvorrichtung vorgesehen, um das Einzelrad abbremsen zu können, so kann der entsprechende Bolzen zugleich auch als Befestigungsbolzen für den zweiten Abschnitt des Trägers dienen. Die Länge des zweiten Abschnittes ist so auszulegen, dass die Achse in die Lageraufnahmen einerseits einführbar und das Befestigungslager am zweiten Abschnitt auf den Befestigungsbolzen im Wagengestell bzw. am Querteil aufsteckbar ist.

Die Erfindung wird nachfolgend anhand des in der Zeichnung dargestellten Ausführungsbeispiels ergänzend erläutert.

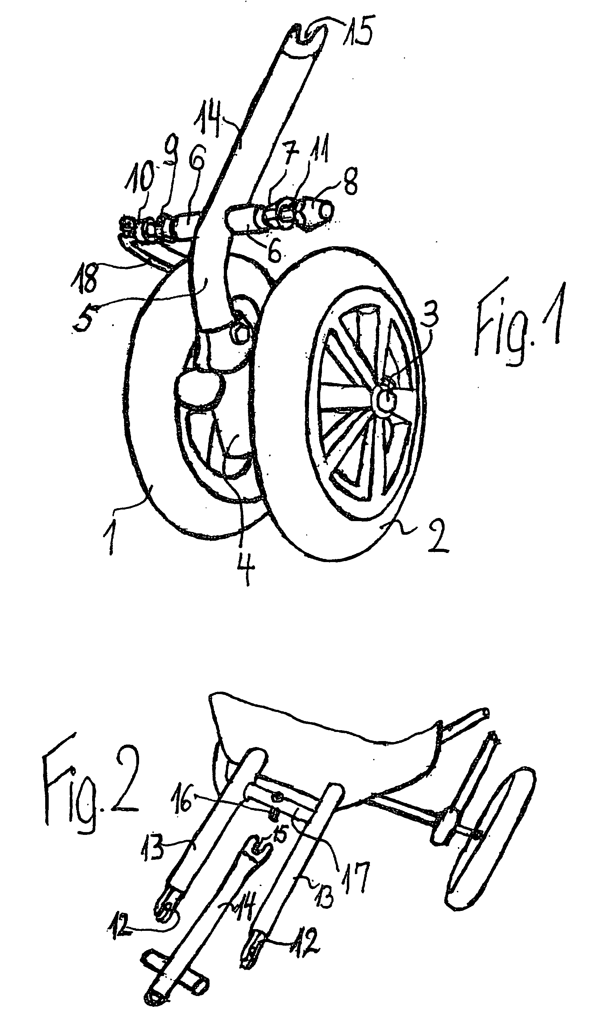

Figur 1 zeigt einen Nachrüstsatz nach der Erfindung. Dieser besteht aus einem Radpaar, das aus den beiden Rädern 1 und 2 besteht, die auf einer horizontalen Achse 3 drehbar gelagert sind und durch Arretierungsmittel nicht ohne weiteres von dieser abgezogen werden können. Die horizontale Achse 3 ist fest an einem Lagergehäuse 4 befestigt und steht seitlich entsprechend hervor, so dass die beiden Räder 1 und 2 seitlich des Lagergehäuses 4 angeordnet sind. Dieses Lagergehäuse 4 ist bei verschiedenen vierrädrigen Kinderwagenausführungen bekannt und um eine senkrechte Achse schwenkbar, so dass die Räder 1, 2 mit ihrer horizontalen Achse in jede Drehstellung verbracht werden können und sich beim Schieben automatisch in die gewünschte Schieberichtung stellen. Darüber hinaus kann in dem Lagergehäuse 4 auch eine Arretierungseinrichtung vorgesehen sein, die es ermöglicht, die Drehbewegung zu blockieren, so dass beispielsweise ein Geradeauslauf entsprechend einem Einzeldad gewährleistet ist. Auch dies ist bei vielen Kinderwagen mit einer vierrädrigen Räderanordnung realisiert. Ferner kann an dem Lagergehäuse auch ein Schieber vorgesehen sein, um darüber einen seitlich vorstehenden Bremszapfen bewegen zu können, der beim Hinunterschieben des Schiebers in einen Zahnkranz, der innenseitig an mindestens einem der Räder vorgesehen ist, eingreift. Zum Lösen der Feststellbremse muss der Schieber wieder nach oben geschoben werden.

Das Lagergehäuse 4 ist an einem ersten Abschnitt 5 eines Trägers befestigt, und zwar so, dass es in gewünschter Weise um die vertikale Achse verdrehbar ist. Dies kann durch einen Lagerzapfen bewirkt werden, der in eine variable Lagerausnehmung des Lagergehäuses 4 eingreift. Der erste Abschnitt 5 weist oben eine Abwinklung in Form einer Krümmung auf. Der Träger selbst besteht aus einem Stahlrohr. Hinter dem Abbiegungswinkel sind seitlich zwei Hülsen angeschweißt, die einen Querverbindungsteil 6 bilden. Das Rohr des Trägers ist in diesem Bereich durchbohrt, so dass durch die Hülsen hindurch z.B. eine Gewindestange eingeschoben werden kann bzw. ein Lagerbolzen mit daran befindlichen, seitlich vorstehenden Gewindezapfen 11. Auf diese Gewindezapfen sind Kontermuttern 7 und 9 seitlich aufgeschraubt. Sie lassen sich verstellen, so dass die Breite der lichten Gabelweite bzw. dem Abstand zwischen den Holmenden 13, wie aus Figur 2 ersichtlich ist, anpassbar ist. Die Gewindezapfen 11 lassen sich in die U-förmigen Lagerausnehmungen 12 in den Holmenden 13 (Fig. 2) einsetzen und hieran mittels der weiterhin vorgesehenen Hutmutter 8 und des Schnellspannverschlusses 18, der einen Schraubteil 10 aufweist, der auf den Gewindezapfen 11 aufgeschraubt wird, befestigen. Dazwischen können selbstverständlich noch Scheiben zwischengefügt sein.

Figur 1 zeigt ferner, dass der zweite Abschnitt 14 des Trägers im hinteren Bereich zusammengedrückt ist, also als flaches Teil ausgebildet ist. In dem Endabschnitt befindet sich eine U-förmige Lagerungsausnehmung 15. Diese U-förmige Lagerausnehmung 15 wird - wie aus Figur 2 ersichtlich - auf einen Lagerzapfen 16, der an einem Halter 17 befestigt ist, der die beiden Holmenden 13 hinter dem normalerweise eingesetzten Vorderrad verbindet, aufgeschoben und dort mittels einer Schraube befestigt. Auf diesen Lagerzapfen 16 kann bei normaler Ausführung mit einem Einzelrad mit starrer Vorderachse eine Bremseinrichtung befestigt sein. Die Figuren sind in einer Fotoperspektive schematisch dargestellt.

### Bezugszeichenliste

- 1: Rad
- 2: Rad
- 3: horizontale Achse
- 4: Lagergehäuse
- 5: erster Abschnitt
- 6: Querverbindungsteil
- 7: Kontermutter
- 8: Nutmutter
- 9: Kontermutter
- 10: Schraubteil
- 11: Gewindezapfen
- 12: Lagerausnehmung
- 13: Gabelschenkel
- 14: zweiter Abschnitt
- 15: Lagerausnehmung
- 16: Gewindezapfen
- 17: Halter
- 18: Schnellspannverschluss

## Patentansprüche

1. Rad-Nachrüstsatz zum Ersatz des Vorderrades an einem dreirädrigen Schiebewagen für Kinder und/oder Puppen, der zur Aufnahme der horizontalen Achse eines Vorderrades eine Gabel mit U-förmigen Lagerausnehmungen (12) in den Gabelschenkeln (13) aufweist, aufweisend:
- einen Träger (5, 14), der sich mindestens mit einem Teil (14) über ein bestimmtes Tiefenmaß über die Länge der Gabel erstreckt und mittels eines Querverbindungsteils (6) zwischen den U-förmigen Lagerausnehmungen (12) und hieran mittels seitlich vorgesehener Befestigungseinrichtungen (7, 8, 9, 10), welche auf vorstehende Bolzen oder Gewindezapfen (11) aufgebracht sind, durch Kraftschluss vorderseitig an beiden Gabelschenkeln (13) und durch mindestens ein Befestigungsmittel oder eine Passführung am hinteren Ende an mindestens einem Gabelschenkel (13) oder an einem Halteteil am Wagengestell befestigbar ist, und
- ein Lagergehäuse (4), das an dem Träger (5, 14) zur Aufnahme eines um eine vertikale Achse schwenkbaren Halterung für die Horizontalachse (3) mindestens eines Vorderrades (1, 2) vorgesehen ist.

2. Nachrüstsatz nach Anspruch 1, **dadurch gekennzeichnet, dass** der Träger (5, 14) aus einem Brückenelement besteht, an dem seitlich nach unten vorstehende Haltewände mindestens im Bereich der U-förmigen Lagerausnehmungen (12) vorgesehen sind, die Öffnungen aufweisen, die kongruent zu den U-förmigen Lagerausnehmungen (12) verlaufen, wobei die Haltewände an den Gabelschenkeln (13) mindestens im Bereich der Lagerausnehmungen anliegen.

3. Nachrüstsatz nach Anspruch 1, aufweisend mindestens zwei Räder (1, 2), die auf einer gemeinsamen horizontalen Achse (3) drehbar und seitlich an einem Lagergehäuse (4) verlaufend gelagert sind, an welchem die Achse (3) befestigt ist und welches sich im wesentlichen senkrecht nach oben erstreckt und um eine vertikale Achse drehbar gelagert ist und Vorrichtungen zur Befestigung an einem Träger aufweist, der einen ersten Abschnitt (5) aufweist, der an einem Querverbindungsteil (6) mit seitlichen Befestigungseinrichtungen (7, 8, 9, 10) befestigt ist, welche Befestigungseinrichtungen (7, 8, 9, 10) auf Bolzen oder Gewindezapfen (11) vorgesehen sind, die in U-förmige Lagerausnehmungen (12) in den Gabelschenkeln (13) der Gabel des Schiebewagengestells anstelle des einzigen Vorderrades einsetzbar und hieran befestigbar sind, und der einen zweiten Abschnitt (14) aufweist, der gegenüber dem ersten Abschnitt (5) abgewinkelt verläuft und an der anderen Seite des Querverbindungsteils (6) vorgesehen ist und Befestigungsmittel zum lösbaren Fixieren mindestens an einem Befestigungspunkt im Schiebewagengestell aufweist.

4. Nachrüstsatz nach Anspruch 3, **dadurch gekennzeichnet, dass** der Träger aus einem runden Rohr oder Profilrohr besteht, wobei der erste Abschnitt (5) gegenüber dem zweiten Abschnitt (14) abgewinkelt oder abgebogen ist und dass hinter der Abwinkelung bzw. dem Bogen an das Rohr seitlich zueinander fluchtende Hülsen angeschweißt oder angelötet sind, die den Querverbindungsteil (6) bilden.

5. Nachrüstsatz nach Anspruch 1, 3 oder 4, **dadurch gekennzeichnet, dass** der zweite Abschnitt (14) des Trägers mindestens im Endbereich abgeflacht ist und eine U-förmige Lagerausnehmung (15) oder Bohrung aufweist, mit der der Träger auf einen vorstehenden Gewindezapfen (16) an einem Halter (17) aufsteckbar und festschraubbar ist.

6. Nachrüstsatz nach Anspruch 3 oder 5, **dadurch gekennzeichnet, dass** an dem zweiten Abschnitt mindestens an der Unter- oder Oberseite ein Querteil als Befestigungsmittel vorgesehen ist, das mit den seitlichen Holmenden (13) verbindbar ist.

7. Nachrüstsatz nach Anspruch 6, **dadurch gekennzeichnet, dass** das Querteil drehbar angeordnet und zur Sicherung in eine quergestellte Position verschwenkbar ist.

8. Nachrüstsatz nach Anspruch 6 oder 7, **dadurch gekennzeichnet, dass** auf die Enden der Querteile bzw. auf die Enden eines Querteils Klippbefestiger aufsteckbar oder aufrastbar sind, die über die Holmenden rastend greifen.

9. Nachrüstsatz nach Anspruch 1 oder 3, **dadurch gekennzeichnet, dass** auf den seitlichen Gewindezapfen (11) der Achse Kontermuttern (7, 9) zur Anpassung der Distanz an die lichte Weite zwischen den Holmenden (13) aufgeschraubt sind und dass die überstehenden Gewindezapfenenden mittels aufgesetzter Muttern oder Schnellspannverschlusselemente (18) an den Holmenden (13) befestigbar sind.

10. Nachrüstsatz nach Anspruch 1 oder 3, **dadurch gekennzeichnet, dass** das Lagergehäuse (4) mittels Arretierungsmittel derart am senkrechten Lagerzapfen arretierbar ist, dass die Räder (1, 2) in gerader Linienführung achsparallel zu den Hinterrädern ausgerichtet sind.

11. Nachrüstsatz nach Anspruch 1, 3 oder 10, **dadurch gekennzeichnet, dass** an oder in dem Lagergehäuse (4) eine Feststellbremseinrichtung in Form eines Schiebers vorgesehen ist, der mindestens einseitig einen querverlaufenden Rastansatz aufweist, der in ein Bremsritzel mindestens eines der Räder (1, 2) verbringbar ist.

12. Nachrüstsatz nach Anspruch 1, 3 oder 9, **dadurch gekennzeichnet, dass** der Schnellschlussverbinder aus einem stirnseitig aufschraubbaren Spannhebel besteht, der eine auf die Achse wirkende Spannkraft beim Umlegen ausübt.

13. Nachrüstsatz nach Anspruch 1, 3 oder 4, **dadurch gekennzeichnet, dass** der Halter (17) der hintere Querverbindungsteil der Gabelschenkel (13) ist.

14. Nachrüstsatz nach Anspruch 1, 3 oder 5, **dadurch gekennzeichnet, dass** der Schraubzapfen der Lagerzapfen eine Bremse ist, die auf das Einzelrad wirkt.

15. Nachrüstsatz nach einem der vorhergehenden Ansprüche, **dadurch gekennzeichnet, dass** der Träger nur den vorderen Abschnitt aufweist und dass der Querverbindungsteil nach außen vorstehende Zapfen aufweist, die planparallele Lagerflächen aufweisen, die passgenau in die gabelförmigen Aufnahmen der Holme eingreifen und diese seitlich nicht überstehen.

16. Nachrüstsatz nach Anspruch 1, aufweisend mindestens zwei Räder (1, 2), die auf einer gemeinsamen horizontalen Achse (3) drehbar und seitlich an einem Lagergehäuse verlaufend gelagert sind, das um eine vertikale Achse drehbar gelagert ist, die in einem Lager an dem Träger befestigt ist, der als Flächenelement oder in Form eines Gehäuses ausgebildet ist, das von vorne auf die Gabelschenkel (13) des Schiebewagens anstelle des einzigen Vorderrades mit nur einer horizontalen Achse aufschiebbar ist.

17. Nachrüstsatz nach Anspruch 1, 2 oder 16, **dadurch gekennzeichnet, dass** der Träger mittels einer Gewindestange oder Schrauben, die durch Bohrungen in Seitenwänden des Trägers hindurchgesteckt sind, an den Holmenden in den U-förmigen Lagerausnehmungen (12) befestigbar sind.

18. Nachrüstsatz nach einem der vorhergehenden Ansprüche, **dadurch gekennzeichnet, dass** an Stelle von zwei Vorderrädern nur ein Vorderrad vorgesehen ist, das in einer Gabel gelagert ist, die um eine senkrechte Achse verschwenkbar an dem Träger gelagert ist.

19. Nachrüstsatz nach Anspruch 1, 2, 16 oder 17, **dadurch gekennzeichnet, dass** die Seitenwände des Trägers eine Führung an den Innenseiten der Holmenden bilden und mit einem nach außen vorstehenden Ansatz mindestens im hinteren Bereich des Trägers oder des Gehäuses die Holmenden sichernd untergreifen.

20. Dreirädriger Schiebewagen für Kinder oder Puppen, **dadurch gekennzeichnet, dass** ein Nachrüstsatz nach einem der vorhergehenden Ansprüche in diesem integriert ist.

## Claims

1. Wheel retrofit kit for replacing the front wheel of a three-wheeled pushcarriage for children and/or dolls, which for reception of the horizontal axle of a front wheel has a fork with U-shaped bearing recesses (12) in the fork limbs 13, comprising:
- a carrier (5, 14) which extends by at least a part (14) over a defined depth dimension over the length of the fork and is fastenable by means of a transverse connecting member (6) between the U-shaped bearing recesses (12) and thereat by means of laterally provided fastening devices (7, 8, 9, 10), which are mounted on projecting bolts or threaded pins (11), by force-locking couple at the front to both fork limbs (13) and by at least one fastening means or a locating guide at the rear end to at least one fork limb (13) or to a mounting member at the carriage chassis and
- a bearing housing (4) which is provided at the carrier (5, 14) for receiving a mount, which is pivotable about a vertical axis, for the horizontal axle (3) of at least one front wheel (1, 2).

2. Retrofit kit according to claim 1, **characterised in that** the carrier (5, 14) consists of a bridge element, at which laterally downwardly protruding mounting walls are provided at least in the region of the U-shaped bearing recesses (12), the mounting walls having openings which extend congruently with the U-shaped bearing recesses (12), wherein the mounting walls bear against the fork limbs (13) at least in the region of the bearing recesses.

3. Retrofit kit according to claim 1, comprising at least two wheels (1, 2) which are mounted on a common horizontal axle (3) to be rotatable and to extend laterally at a bearing housing (4), to which the axle (3) is fastened and which extends substantially vertically upwards and is mounted to be rotatable about a vertical axis and comprises devices for fastening to a carrier, which has a first section (5), which is fastened to a transverse connecting member (6) by lateral fastening devices (7, 8, 9, 10), which fastening devices (7, 8, 10) are provided on bolts or threaded pins which are insertable in U-shaped bearing recesses (12) in the fork limbs (13) of the forks of the pushcarriage frame instead of the single front wheel and are fastenable thereto, and which has a second section (14), which extends at an angle relative to the first section (5) and is provided at the other side of the transverse connecting member (6) and comprises fastening means for detachable fixing at least to a fastening point at the pushcarriage chassis.

4. Retrofit kit according to claim 3, **characterised in that** the carrier consists of a round tube or a profiled tube, wherein the first section (5) is bent-over or curved relative to the second section (14) and lateral mutually aligned sleeves forming the transverse connecting member (6) are welded or soldered to the tube behind the bend or curve.

5. Retrofit kit according to claim 1, 3 or 4, **characterised in that** the second section (14) of the carrier is flattened at least in the end region and has a U-shaped bearing recess (15) or bore, by which the carrier can be plugged onto a projecting threaded pin (16) at a mount (17) and screwed fast.

6. Retrofit kit according to claim 3 or 5, **characterised in that** a transverse member connectible with the lateral beam ends (13) is provided as fastening means at the second section at least at the lower side or upper side.

7. Retrofit kit according to claim 6, **characterised in that** the transverse member is arranged to be rotatable and is pivotable for securing in a transversely set position.

8. Retrofit kit according to claim 6 or 7, **characterised in that** clip fasteners engaging in detenting manner over the beam ends can be plugged or detented onto the ends of the transverse members or onto the ends of a transverse member.

9. Retrofit kit according to claim 1 or 3, **characterised in that** lock nuts (7, 9) for adapting the distance to the clear width between the beam ends (13) are screwed onto the lateral threaded pins (11) of the axle and that the protruding threaded pin ends are fastenable to the beam ends (13) by means of nuts or quick-action clamping closure elements (18) which are placed on.

10. Retrofit kit according to claim 1 or 3, **characterised in that** the bearing housing (4) can be locked to the vertical bearing pin by means of locking means in such a manner that the wheels (1, 2) are oriented in straight rectilineal guidance axially parallel to the rear wheels.

11. Retrofit kit according to claim 1, 3 or 10, **characterised in that** a parking brake device in the form of a slide is provided at or in the bearing housing (4) and has on at least one side a transversely extending detent projection which can be brought into a brake pinion of at least one of the wheels (1, 2).

12. Retrofit kit according to claim 1, 3 or 9, **characterised in that** the quick-action closure connector consists of a clamping lever which can be screwed on at the front end and which when laid over exerts a clamping force acting on the axle.

13. Retrofit kit according to claim 1, 3 or 4, **characterised in that** the mount (17) is the rear transverse connecting member of the fork limbs (13).

14. Retrofit kit according to claim 1, 3 or 5, **characterised in that** the screw spigot of the bearing pin is a brake which acts on the single wheel.

15. Retrofit kit according to one of the preceding claims, **characterised in that** the carrier comprises only the front section and that the transverse connecting member comprises outwardly projecting pins which have plano-parallel bearing surfaces which engage with accurate fit in the fork-shaped receptacles of the beam and do not protrude laterally thereof.

16. Retrofit kit according to claim 1, comprising at least two wheels (1, 2) which are mounted on a common horizontal axle (3) to be rotatable and to extend laterally at a bearing housing, which is mounted to be rotatable about a vertical axle, which is fastened in a bearing at the carrier, which is constructed as a flat element or in the form of a housing which can be pushed from the front onto the fork limbs (13) of the pushcarriage instead of the single front wheel with only one horizontal axle.

17. Retrofit kit according to claim 1, 2 or 16, **characterised in that** the carrier is fastenable to the beam ends in the U-shaped bearing recesses (12) by means of a spindle or screws which are plugged through bores in side walls of the carrier.

18. Retrofit kit according to one of the preceding claims, **characterised in that** instead of two front wheels there is provided only one front wheel, which is mounted in a fork and mounted on the carrier to be pivotable about a vertical axis.

19. Retrofit kit according to claim 1, 2, 16 or 17, **characterised in that** the side walls of the carrier form a guide at the inner sides of the beam ends and engage in securing manner under the beam ends by an outwardly protruding projection at least in the rearward region of the carrier or the housing.

20. Three-wheeled pushcarriage for children or dolls, **characterised in that** a retrofit kit according to one of the preceding claims is integrated therein.

## Revendications

1. Elément montable ultérieurement pour remplacer la roue avant d'une poussette à trois roues pour enfant ou poupée, laquelle comporte une fourche avec des creux en U (12) dans les bras de la fourche (13) pour le logement de l'axe horizontal (12) , ledit élément comportant :
- un montant (5, 14) ) s'étendant au moins avec une partie (14) sur un degré de profondeur déterminé au-dessus de la longeur de la fourche et étant fixable au moyen d' une traverse (6) entre les creux en U (12) aux creux par des dispositifs de fixation (7, 8, 9, 10) placés sur des boulons ou bouchons (11) en saillie et par adhérence sur le devant en les deux bras (13) et par au moins un dispositif de fixation ou un guidage précis à l'extrémité arrière au moins en un bras (13) ou en un support au châssis, et
- un support (4) étant prévu sur le montant (5, 14) pour le logement d'un dispositif de fixation mobile sur un axe vertical pour l'axe horizontal (3) au moins d'une roue avant (1, 2).

2. Elément montable ultérieurement selon la revendication 2, **caractérisé en ce que** le montant (5, 14) consiste d'un élément de fixation comprenant des parois portantes latéralement saillant vers le bas au moins dans le secteur des creux en U (12), quelles creux comprennent des mortaises coïncidant avec les creux en U (12), les parois portantes se moulant aux bras de la fourche (13) au moins dans le secteur des creux

3. Elément montable ultérieurement selon la revendication 1, comportant au moins deux roues (1, 2), placées mobile sur un axe commun horizontal (3) et situées au côté d'un support (4), auquel l'axe (3) est fixé et lequel essentiellement s'étend vers le haut tournant autour d'un axe vertical et comporte des dispositifs pour la fixation en un montant, ledit montant comprenant une première section (5) fixée à une traverse (6) par des dispositifs de fixation (7, 8, 9, 10) situés au côté, quelles dispositifs de fixations (7, 8, 9, 10) sont placés sur des boulons ou bouchons (11) et sont à insérer et fixables aux supports en U (12) dans les bras (13) de la fourche du châssis de la poussette au lieu de la seule roue avant, ledit support comprenant une deuxième section (14), laquelle est courbée an arc auprès de la première section (5) et placée à l'autre côté de la traverse (6) et comporte des dispositifs pour une fixation détachable au moins en un point de fixation dans le châssis de la poussette.

4. Elément montable ultérieurement selon la revendication 3, **caractérisé en ce que** le montant consiste d' un tube circulaire ou d'un tube profilé, la première section (5) étant courbée en arc auprés de la deuxième section (14), et que derrière le cambrage ou arc au tube se trouvent des manchons latéralement alignant l'un à l'autre formant la traverse.

5. Elément montable ultérieurement selon la revendication 1, 3 ou 4, **caractérisé en ce que** la deuxième section (14) du montant est nivelée au moins dans la section en bout et comporte un creux en U (15) ou un trou au moyen duquel le montant peut être attaché ou fixé par boulons à un bouchon (16) en saillie en un élément de fixation

6. Elément montable ultérieurement selon la revendication 3 ou 5 **caractérisé en ce que** dans la deuxième section au moins en bas ou en haut une traverse est prévue comme élément de fixation, lequel peut être attaché aux extrémités des longerons latéraux (13).

7. Elément montable ultérieurement selon la revendication 6, **caractérisé en ce que** la traverse est placée pivotant et articulée en position transversale pour l'arrêter.

8. Elément montable ultérieurement selon la revendication 6 ou 7 **caractérisé en ce que** sur les extrémités des traverses ou sur les extrémités d'une traverse des clips pour la fixation sont prévus pour l'encliquetage à travers des extrémités des longerons (13).

9. Elément montable ultérieurement selon la revendication 1 ou 3, **caractérisé en ce que** sur les bouchons latéraux (11) de l'axe des contre-écrous (7, 9) sont prévus pour ajuster la distance au diamètre intérieur entre les extrémités des longerons (13) et que les extrémités des bouchons en saillie sont fixables aux extrémités des longerons (13) par des écrous montés ou des éléments de fixation rapide (18).

10. Elément montable ultérieurement selon la revendication 1 ou 3, **caractérisé en ce que** le support (4) peut être arrêter par des dispositifs d'arrêt en le tourillon de telle manière que les roues (1, 2) sont centrées en ligne droite parallèle à l'axe des roues arrières.

11. Elément montable ultérieurement selon la revendication 1, 3 our 10, **caractérisé en ce qu'** au ou dans le support (4) un frein de blocage en forme d'un élément à pousser est prévu comprenant au moins un bout d'arrêt transversal d'un seul côté, ledite élément à pousser pouvant être mis en un pignon à frein au moins d'une des roues (1, 2).

12. Elément montable ultérieurement selon la revendication 1, 3 ou 9, **caractérisé en ce que** l'élément de fixation rapide consiste d'un levier de serrage à vis sur la face exerçant un effort de serrage sur l'axe en renversant.

13. Elément montable ultérieurement selon la revendication 1, 3 ou 4, **caractérisé en ce que** l'élément de support (17) est la traverse arrière des bras de la fourche (13).

14. Elément montable ultérieurement selon la revendication 1, 3 ou 5 **caractérisé en ce que** le bouchon des tourillons est un frein excerçant une influence sur la seule roue.

15. Elément montable ultérieurement selon une des revendications précédentes, **caractérisé en ce que** le montant comprend seulement la section avant et que la traverse comporte des tenons faisant saillie vers l'extérieur, lesdits tourillons comportant des supports à faces planes et parallèles, quels supports sont placés précisément entre les longerons fourchés sans les dépasser latéralement.

16. Elément montable ultérieurement selon la revendication 1, comportant au moins deux roues (1, 2), lesquelles tournant autour d'un axe commun horizontal et situées au côté d'un support, le support tournant autour d'un axe vertical, lequel est fixé à un support dans le montant formé comme une plaque ou en forme d'un support, quel support peut être poussé par-devant aux bras de la fourche (13) de la poussette au lieu de la seule roue avant au moyen d'un seule axe horizontal.

17. Elément montable ultérieurement selon les revendications 1, 2 ou 16, **caractérisé en ce que** le montant est fixable au moyen d'une tige filetée ou des vis fixées à travers des trous dans les parois latérales du montant aux extrémités des longerons dans les creux en U (12).

18. Elément montable ultérieurement selon une des revendications précédentes, **caractérisé en ce qu'**au lieu de deux roues avant une seule roue avant est prévue et montée dans une fourche, ladite fourche étant articulée autour d'un axe vertical sur le montant.

19. Elément montable ultérieurement selon les revendications 1, 2, 16 ou 17, **caractérisé en ce que** les parois latérales du montant forment une guidage dans les côtés latéraux des extrémités des longerons et saisissent les extrémités des longerons pour arrêter celles-ci par un embout faisant saillie vers l'extérieur au moins dans le domaine arrière du montant ou du support.

20. Poussette à trois roues pour enfant ou poupée, **caractérisée en ce qu'**un élément montable selon une des revendications précédentes est intégré.
